(19) Europäisches Patentamt
European Patent Office
Office européen des brevets

(11) **EP 2 035 890 B1**

(12) **FASCICULE DE BREVET EUROPEEN**

(45) Date de publication et mention de la délivrance du brevet:
**28.12.2016 Bulletin 2016/52**

(21) Numéro de dépôt: **07730308.9**

(22) Date de dépôt: **27.06.2007**

(51) Int Cl.:
***G02F 1/39*** (2006.01)

(86) Numéro de dépôt international:
**PCT/EP2007/056438**

(87) Numéro de publication internationale:
**WO 2008/000773 (03.01.2008 Gazette 2008/01)**

(54) **OSCILLATEUR PARAMETRIQUE OPTIQUE AVEC RETOUR DE POMPE A MAINTIEN DE PHASE ACHROMATIQUE.**

OPTISCHER PARAMETRISCHER OSZILLATOR MIT ACHROMATISCHEM PHASENAUFRECHTERHALTENDEM PUMPENRÜCKWEG

OPTICAL PARAMETRIC OSCILLATOR WITH ACHROMATIC PHASE-MAINTAINING PUMP RETURN

(84) Etats contractants désignés:
**CH DE FR GB LI LT**

(30) Priorité: **27.06.2006 FR 0605782**

(43) Date de publication de la demande:
**18.03.2009 Bulletin 2009/12**

(73) Titulaire: **ONERA (Office National d'Etudes et de Recherches Aérospatiales)
92320 Châtillon (FR)**

(72) Inventeurs:
• **LEFEBVRE, Michel**
**91400 Orsay (FR)**
• **MOHAMED, Ajmal**
**91120 Palaiseau (FR)**
• **GODARD, Antoine**
**75009 Paris (FR)**

(74) Mandataire: **Regimbeau
20, rue de Chazelles
75847 Paris Cedex 17 (FR)**

(56) Documents cités:
EP-A1- 0 878 881     FR-A1- 2 093 928
FR-A1- 2 869 118     US-B1- 6 295 160
US-B1- 6 636 343

• TEJA J ET AL: "Twin-beam generation in a triply resonant dual-cavity optical parametric oscillator" OPTICS EXPRESS, OPTICAL SOCIETY OF AMERICA, WASHINGTON, DC,, US, vol. 2, no. 3, 2 février 1998 (1998-02-02), pages 65-72, XP002363027 ISSN: 1094-4087
• DESORMEAUX A ET AL: "Entangled cavity optical parametric oscillator: OPO supreme for spectroscopy in the mid-IR" LASERS AND ELECTRO-OPTICS, 2005. (CLEO). CONFERENCE ON BALTIMORE, MD, USA MAY 22-27, 2005, PISCATAWAY, NJ, USA,IEEE, 22 mai 2005 (2005-05-22), pages 1960-1962, XP010877021 ISBN: 1-55752-795-4
• VODOPYANOV K L ET AL: "Optical parametric oscillation in quasi-phase-matched GaAs" OPTICS LETTERS OPT. SOC. AMERICA USA, vol. 29, no. 16, 15 août 2004 (2004-08-15), pages 1912-1914, XP002417272 ISSN: 0146-9592 cité dans la demande
• POWERS P E ET AL: "CONTINUOUS TUNING OF A CONTINUOUS-WAVE PERIODICALLY POLED LITHIUM NIOBATE OPTICAL PARAMETRIC OSCILLATOR BY USE OF A FAN-OUT GRATING DESIGN" OPTICS LETTERS, OSA, OPTICAL SOCIETY OF AMERICA, WASHINGTON, DC, US, vol. 23, no. 3, 1 février 1998 (1998-02-01), pages 159-161, XP000741202 ISSN: 0146-9592

- **BJORKHOLM J E ET AL: "Improvement of optical parametric oscillators by nonresonant pump reflection" IEEE JOURNAL OF QUANTUM ELECTRONICS, IEEE SERVICE CENTER, PISCATAWAY, NJ, US, vol. QE-6, no. 12, 1 décembre 1970 (1970-12-01), pages 797-799, XP002309981 ISSN: 0018-9197 cité dans la demande**
- **STEINMEYER G: "FEMTOSECOND DISPERSION COMPENSATION WITH MULTILAYER COATINGS: TOWARD THE OPTICAL OCTAVE" APPLIED OPTICS, OSA, OPTICAL SOCIETY OF AMERICA, WASHINGTON, DC, US, vol. 45, no. 7, 1 mars 2006 (2006-03-01), pages 1484-1490, XP001239232 ISSN: 0003-6935 cité dans la demande**
- **BERROU ET AL: "Specific architectures for optical parametric oscillators", COMPTES RENDUS - PHYSIQUE, ELSEVIER, PARIS, FR, vol. 8, no. 10, 26 October 2007 (2007-10-26), pages 1162-1173, XP022440932, ISSN: 1631-0705, DOI: 10.1016/J.CRHY.2007.09.012**

**Description**

La présente invention est relative aux oscillateurs paramétriques, essentiellement aux oscillateurs paramétriques optiques doublement résonnant avec retour du rayonnement pompe.

Les processus non linéaires du second ordre sont utilisés en optique pour produire des rayonnements à des fréquences autres que celles émises par une source primaire. Ainsi, lorsque le rayonnement primaire est composé de deux fréquences $f_1$ et $f_2$, il est possible de produire, par somme de fréquences, un rayonnement à la fréquence $f_3$ telle que $f_3 = f_1 + f_2$. De même, par différence de fréquences, une fréquence $f_3$ telle que $f_3 = f_1 - f_2$ ($f_1 > f_2$) est obtenue. Il est aussi possible d'envisager des processus ne faisant intervenir qu'une seule fréquence primaire, tel que le doublage de fréquence qui est un processus de somme de fréquences dégénéré tel que ($f_1 = f_2$), ou la génération paramétrique qui est un processus de différence de fréquences pour lequel le rayonnement primaire de fréquence $f_1$ interagit avec le bruit de photons à la fréquence $f_2$. En génération paramétrique, l'usage conduit à appeler pompe le rayonnement primaire ($f_1 = fp$), signal et complémentaire les deux autres rayonnements impliqués ($f_2 = f_e$ et $f_3 = f_s$), avec $f_s = f_p - f_c$ et par convention $f_s > f_c$.

Ces processus de conversion de fréquences sont généralement mis en oeuvre en faisant propager les différents rayonnements au travers d'un cristal non centro-symétrique présentant une non linéarité optique d'ordre deux. Pour que la conversion de fréquences soit efficace, le cristal est utilisé suivant des conditions bien définies (orientation cristallographique, température,...) de sorte que les rayonnements issus de la conversion de fréquences, interfèrent de façon constructive au cours de leur propagation dans le cristal non linéaire. Les vecteurs d'onde des différents rayonnements impliqués dans le processus de conversion de fréquences vérifient alors une condition dite « d'accord de phase » qui, en génération paramétrique, s'écrit : $kp = k_s + k_c$ où $k_j$ est le vecteur d'onde associé au rayonnement j. La condition d'accord de phase peut être vérifiée en utilisant les propriétés des cristaux biréfringents pour lesquels l'indice optique dépend de la polarisation. C'est « l'accord de phase par biréfringence ».

Toutefois, de façon à ne pas être limité uniquement aux cristaux biréfringents, d'autres approches telles que « l'accord de phase modal » dans les structures guidées ou le « quasi accord de phase » ont été développées. En ce qui concerne le quasi accord de phase qui est l'approche actuellement la plus répandue, la propagation des rayonnements s'effectue au travers du matériau non linéaire en subissant périodiquement des sauts de phase. Le plus souvent, ces sauts sont produits à chaque fois que les rayonnements ont parcouru une distance égale à une longueur de cohérence ($l_c$) où $l_c$ est définie comme la longueur que parcourent les trois rayonnements pour que leur déphasage relatif $\Delta\Phi$, donné par : $\Delta\Phi = \varphi_p - (\varphi_s + \varphi_c)$, change de n, $\varphi_j$ est la phase associée au rayonnement j. La condition de « quasi-accord de phase » s'écrit alors $k_p = k_s + k_c + k_l$ où $k_l$ est défini par $|k_1| = \pi/l_c$.

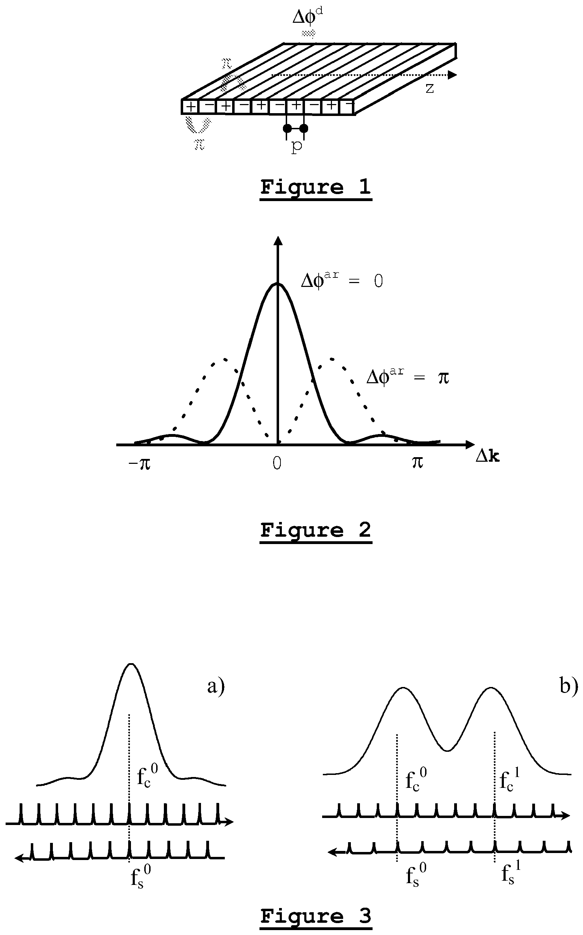

Le quasi-accord de phase est aujourd'hui très largement appliqué aux cristaux ferroélectriques tels que LN (lithium niobate), LT (lithium tantalate), KTP (potassium titanyl phosphate) et ses isomorphes KTA (potassium titanyl arsenate), RTA (rubidium titanyl arsenate). Pour ces matériaux, des sauts de phase de n peuvent être obtenus en inversant périodiquement l'orientation ferroélectrique du matériau (voir figure 1). La largeur de chaque domaine ferroélectrique, p, est fixée par construction à $l_c$ ou à un multiple impair de $l_c$ de sorte que le saut de phase de n qui se produit lors du passage d'un domaine au suivant annule le déphasage relatif $\Delta\Phi^d$, accumulé lors de la propagation à travers chaque domaine, ce qui permet de maintenir une interférence constructive entre les rayonnements issus de la conversion de fréquences. Les cristaux ayant été inversés périodiquement sont notés suivant les acronymes de PPLN, PPKTP, ... où PP signifie « Periodically Poled ». De plus, des travaux récents ont étendu la technique de quasi-accord de phase aux semi-conducteurs [K. L. Vodopyanov, O. Levi, P. S. Kuo, T. J. Pinguet, L. S. Harris, M. M. Fejer, B. Gerard, L. Becouarn, E. Lallier, « Optical parametric oscillation in quasi-phase-matched GaAs », Opt. Lett., 29, n°16, pp 1912-1914 (2004)].

Quelque soit le type d'accord de phase mis en oeuvre, il est important de noter que la même condition d'accord de phase ou de quasi-accord de phase s'applique au processus de génération paramétrique $f_p \rightarrow (f_s, f_c)$ et à celui de somme de fréquences $f_s + f_c \rightarrow f_p$. Les deux processus peuvent donc a priori coexister, allant même jusqu'à s'opposer dans le cristal non linéaire (phénomène dit de reconversion). En fait, à une position z donnée du cristal, c'est essentiellement le déphasage relatif $\Delta\Phi(z) = \varphi_p(z) - [\varphi_s(z) + \varphi_c(z)]$ où $\varphi_j(z)$ est la phase du rayonnement j à l'abscisse z, qui impose le sens du transfert d'énergie et finalement le rendement du processus de conversion de fréquences.

En conséquence, lorsque l'on cherche à accroître l'efficacité d'un processus, tel que le doublage de fréquence, en disposant en cascade plusieurs cristaux non linéaires, il est indispensable d'insérer entre les différents cristaux des dispositifs d'adaptation de phase aptes à maintenir une phase relative entre les rayonnements telle que l'interaction soit constructive dans chaque cristal traversé [S. H. Chakmakjian, M. T. Gruneisen, K. W. Koch III, G. T. Moore, « Phased cascading of multiple nonlinear optical elements for frequency conversion », brevet US 5,500,865, (1996)]. Pour une utilisation sur un domaine spectral étendu, l'adaptation en phase doit être vérifiée quelque soit la fréquence utilisée et doit être maintenue de façon achromatique. Les dispositifs sont alors réalisés à partir d'éléments dispersifs à prismes ou à réseaux de diffraction insérés entre les cristaux montés en cascade [B. Richman, « Achromatic phase matching at third orders of dispersion », brevet US 6,636,343 B1, (2003)].

Les architectures associant des cristaux et des systèmes à prismes ou à réseaux travaillant en cascade présentent toutefois des inconvénients : d'une part, elles introduisent des pertes et d'autre part, elles sont coûteuses et encombrantes ; leur emploi est donc nécessairement limité à un petit nombre de cristaux. De fait, elles sont peu applicables au processus de génération paramétrique de fréquence où l'obtention d'un taux de conversion supérieur à 10 %, nécessaire à la plupart des applications, conduit à faire interagir les rayonnements un grand nombre de fois (> 100, typiquement). Dès lors, plutôt que de disposer un grand nombre de cristaux en cascade, l'approche retenue en génération paramétrique consiste à multiplier le nombre d'allers et retours à travers le même cristal. Ce cristal est placé à l'intérieur d'un résonateur optique dans lequel les rayonnements effectuent de nombreux allers et retours. Le cristal inséré dans son résonateur optique forme une source de rayonnement accordable en fréquence, appelée oscillateur paramétrique optique (OPO).

L'optimisation de l'efficacité de conversion d'un OPO suppose de prendre en compte la valeur de la phase relative entre les trois rayonnements au cours de leurs multiples trajets dans le résonateur. Cet aspect est fondamental pour une catégorie d'OPO appelée « OPO doublement résonnant avec retour de pompe » où les trois rayonnements interagissent aussi bien à l'aller qu'au retour, l'efficacité de conversion dépendant notamment du saut de phase $\Delta\Phi^{ar}$ qui est introduit entre les trois rayonnements lors de leur réflexion. Le saut de phase $\Delta\Phi^{ar}$ est défini par $\Delta\Phi^{ar} = \Delta\Phi^r - \Delta\Phi^a$ avec $\Delta\Phi^r = \varphi_p^r - (\varphi_s^r + \varphi_c^r)$ où les phases $\varphi_j^r$ sont mesurées au niveau de la face arrière du cristal lors des trajets retours et $\Delta\Phi^a = \varphi_p^a - (\varphi_s^a + \varphi_c^a)$ où les phases $\varphi_j^a$ sont mesurées au niveau de la face arrière du cristal lors des trajets allers. La dépendance de l'efficacité de conversion en fonction de $\Delta\Phi^{ar}$ a été étudiée pour des cristaux utilisés en accord de phase par biréfringence dans [J.E. Bjorkholm, A. Askhin, R.G. Smith, « Improvement of optical parametric oscillators by non resonant pump reflection », IEEE, J. of Quant. Electron., QE-6, n°12, pp797-799, (1970)]. Il a été démontré que l'efficacité de conversion de l'OPO est maximale à l'accord de phase exact et pour $\Delta\Phi^{ar} = 0$ [modulo $2\pi$]. En revanche, lorsque $\Delta\Phi^{ar} = n$ [modulo $2\pi$, l'efficacité est moindre à l'accord de phase exact alors qu'elle présente deux maxima situés hors accord de phase. La figure 2 illustre ce comportement, connu de l'art antérieur. Ainsi, le contrôle et la maîtrise de la valeur de $\Delta\Phi^{ar}$ permettent d'optimiser le fonctionnement d'un OPO doublement résonnant avec retour de pompe. Toutefois, ainsi qu'il est aussi souligné dans [J.E. Bjorkholm, A. Askhin, R.G. Smith, « Improvement of optical parametric oscillators by non resonant pump reflection », IEEE, J. of Quant. Electron., QE-6, n°12, pp797-799, (1970)], le fait que la courbe d'efficacité de l' OPO dépende de $\Delta\Phi^{ar}$ est un inconvénient majeur de l'OPO doublement résonnant avec retour de pompe car il est nécessaire de contrôler la valeur de $\Delta\Phi^{ar}$ en fonction de la fréquence de fonctionnement de l'OPO, ce qui complique fortement la mise en oeuvre de ce type d'OPO.

Ainsi, les performances atteintes par les OPO doublement résonnant avec retour de pompe, peuvent être très sensiblement améliorées en disposant en sortie de résonateur un dispositif réfléchissant, avec une phase adaptée ($\Delta\Phi^{ar} = 0$ pour obtenir le maximum d'efficacité en accord de phase exact par biréfringence), tout [A. Bandilla, W. Brunner, R. Fischer, H. Paul, « Dispositif pour réduire l'énergie de pompage dans le cas d'oscillateurs paramétriques optiques », FR 2 093 928, (1971)] ou partie [M. Lefebvre, A. Desormeaux, E. Rosencher, « Oscillateur paramétrique doublement résonnant à retour de pompe adapté », WO2005111711 (A1), (2005)] du rayonnement de pompe. Toutefois, compte tenu de la dispersion d'indice optique des miroirs à multicouches diélectriques mis en oeuvre dans les dispositifs à retour de pompe de l'art antérieur, la valeur du déphasage relatif entre les rayonnements $\Delta\Phi^{ar}$ dépend de l'empilement des différentes couches diélectriques et varie en fonction de la fréquence de fonctionnement de l'OPO. Autrement dit, le maintien de $\Delta\Phi^{ar}$ n'est pas achromatique. Il en est de même lorsque l'on utilise un prisme en réflexion totale [K. D. Zang, E.

Margalith, « Broad tuning-range optical parametric oscillator », US6295160 (B1), (2001)] du fait de la dispersion optique du matériau et des déphasages entre les trois rayonnements lors des réflexions internes.

Il n'est donc pas possible de maîtriser, par construction, la valeur de $\Delta\Phi^{ar}$ et de s'assurer a priori que $\Delta\Phi^{ar}$ soit maintenue à sa valeur optimale quelque soit la fréquence produite en sortie d'OPO. C'est pourquoi, pour maîtriser la valeur de $\Delta\Phi^{ar}$ et son évolution avec la fréquence, les dispositifs de l'art antérieur ont recours à un moyen d'ajustement a posteriori, comme par exemple une boucle d'asservissement de type PID (Phase, Intégrale, Dérivée). L'asservissement de la phase relative entre les différents rayonnements nécessite d'utiliser un dispositif séparant, avant le trajet retour, au moins l'un des trois rayonnements impliqués dans le processus de conversion paramétrique, ce qui accroît la complexité de la source, augmente son coût de fabrication et rend plus difficiles sa réalisation ainsi que sa mise au point.

Le document TEJA et al. ("Twin-beam génération in a triply resonant dual-cavity optical parametric oscillator" OPTICS EXPRESS, OPTICAL SOCIETY OF AMERICA, WASHINGTON, DC, US, vol. 2, no. 3, 2 February 1998 (1998-02-02), pages 65-72, XP002363027 ISSN: 1094-4087) décrit un oscillateur paramétrique optique triplement résonnant comportant deux cavités, l'une étant résonnante aux ondes signal et complémentaire, l'autre étant résonnante à l'onde pompe.

Le document DESORMEAUX A et al. ("Entangled cavity optical parametric oscillator: OPO supreme for spectroscopy in the mid-IR" LASERS AND ELECTRO-OPTICS, 2005. (CLEO).CONFERENCE ON BALTIMORE, MD, USA MAY 22-27, 2005, PISCATAWAY, NJ, USA.IEEE, 22 May 2005 (2005-05-22), pages 1960-1962, XP010877021, ISBN: 1-55752-795-4) décrit un oscillateur paramétrique optique utilisant quatre miroirs, permettant un réglage indépendant de la cavité signal et de la cavité complémentaire.

De l'analyse précédente, il ressort que les OPO doublement résonnant avec retour de pompe conçus suivant les dispositifs de l'art antérieur ne sont pas pleinement satisfaisants car aucun ne présente un dispositif simple et compact permettant de maintenir constant le déphasage relatif $\Delta\Phi^{ar}$ sur un domaine spectral étendu. La présente invention apporte une solution aux limitations de l'art antérieur en mettant en oeuvre un dispositif de retour de pompe à maintien de phase achromatique tel que $\Delta\Phi^{ar}$ soit fixé à une valeur indépendante de la fréquence par construction, c'est-à-dire sans avoir recours à un moyen d'ajustement en cours d'utilisation.

Un oscillateur paramétrique optique doublement résonnant avec retour du rayonnement pompe selon l'invention est défini dans les revendications.

Dans une variante de réalisation où un des rayonnements est à fréquence fixe, le miroir large bande est constitué à partir d'un empilement de couches diélectriques déposées sur un même substrat afin de former une paire de miroirs dispersifs de type « double-chirped mirrors » [R. Szipocs, F. Krausz, « Dispersive dielectric mirror », US005734503, (1998)] associé à un miroir diélectrique multicouches standard. L'empilement des couches diélectriques de la paire de miroirs dispersifs est soigneusement calculé et agencé afin de compenser la dispersion optique entre les deux rayonnements à fréquence variable tandis que le troisième rayonnement à fréquence fixe est réfléchi par le miroir diélectrique multicouches standard. Cet ensemble de couches diélectriques peut être partiellement réfléchissant à au moins un des rayonnements pompe, signal ou complémentaire.

La mise en oeuvre de l'invention tire pleinement avantage du fait que les ondes signal et complémentaire oscillent dans deux cavités distinctes dont les longueurs peuvent être choisies suivant le mode de fonctionnement voulu, comme illustré sur la figure 3. Ainsi, un premier mode de fonctionnement mono fréquence consiste à choisir les longueurs des cavités pour qu'il n'existe qu'une seule coïncidence de mode entre les deux cavités qui soit placée au centre de la courbe de gain paramétrique comme indiqué sur la figure 3a. Pour ce premier mode de fonctionnement, les caractéristiques du miroir large bande sont fixées par construction afin que l'écart de déphasage relatif $\Delta\Phi^{ar}$ soit tel que la courbe de gain ne présente qu'un seul maximum central. Dans un second mode de fonctionnement bi fréquence, les longueurs des cavités sont choisies afin qu'il existe deux coïncidences de modes situées en dessous de chaque maximum de la courbe de gain paramétrique comme indiqué sur la figure 3b. Dans ce second mode de fonctionnement, l'écart de déphasage relatif $\Delta\Phi^{ar}$, est fixé par construction afin d'obtenir une courbe de gain avec deux maxima. Ce deuxième mode de fonctionnement permet d'émettre simultanément deux fréquences signal voisines $f_s^0$ et $f_s^1$ avec un espacement ajustable en fonction des longueurs des deux cavités.

La face arrière du cristal peut assurer le retour de pompe avec maintien de phase achromatique. Dans ce cas, le revêtement métallique ou les couches diélectriques des miroirs dispersifs sont déposées directement sur la face de sortie du cristal non linéaire et forment un seul bloc avec le cristal.

Avantageusement, le cristal non linéaire est utilisé en quasi-accord de phase. L'épaisseur du dernier domaine traversé est alors fixée par construction suivant le mode de fonctionnement souhaité.

Le dernier domaine du cristal utilisé en quasi-accord de phase est de longueur optique variable de façon à permettre une sélection rapide du mode de fonctionnement de l'OPO.

Dans un autre type de réalisation utilisant le quasi-accord de phase, le dernier domaine traversé est de forme prismatique afin d'atteindre les différents modes de fonctionnement par simple translation du cristal suivant une direction orthogonale au rayonnement pompe.

Ainsi, l'OPO doublement résonnant avec retour de pompe à maintien de phase achromatique proposé dans l'invention permet d'améliorer sensiblement la mise en oeuvre de ces OPO en s'affranchissant de l'utilisation d'un dispositif de contrôle et de pilotage de la phase relative entre les rayonnements en fonction de la fréquence produite par l'OPO. Sa mise en oeuvre en combinaison avec deux cavités distinctes pour les ondes signal et complémentaire permet d'obtenir deux modes de fonctionnement mono fréquence ou bi fréquence où le rayonnement signal comporte soit une seule fréquence $f_s^0$ ou soit deux fréquences voisines $f_s^0$ et $f_s^1$, ce dernier mode de fonctionnement peut s'avérer particulièrement utile lorsque l'on souhaite faire une mesure d'absorption différentielle, par exemple.

D'autres caractéristiques et avantages de l'invention ressortiront de la description qui suit et des exemples non limitatifs.

Les dessins annexés illustrent l'invention:

- La figure 1 illustre la mise en oeuvre du quasi-accord de phase par retournement périodique des domaines ferro-électriques ;
- Les courbes de la figure 2 illustrent la dépendance de l'efficacité de conversion paramétrique en fonction du désaccord de phase entre les vecteurs d'onde $\Delta k = k_p - (k_s + k_c)$, pour deux valeurs du déphasage relatif $\Delta\Phi^{ar}$; ces courbes sont obtenues pour un accord de phase par biréfringence ;
- La figure 3, présente les deux modes de fonctionnement a) (mono fréquence) et b) (bi fréquence) accessibles par l'invention ;
- La figure 4, présente schématiquement la mise en oeuvre de l'invention ;
- La figure 5 est relative à une mise en oeuvre de l'invention pour un OPO doublement résonnant fonctionnant en accord de phase par biréfringence et utilisant deux cavités séparées, agencées suivant une géométrie repliée ;

- La figure 6 présente l'évolution de la variation du déphasage relatif $\Delta\Phi^{ar}$ entre les rayonnements pompe, signal et complémentaire au cours d'une réflexion sur une interface air/aluminium en fonction de la longueur d'onde signal ou complémentaire. Les différentes courbes ont été calculées pour différentes longueurs d'onde de pompe : 1,55, 1,06 et 0,532 $\mu$m ;
- La figure 7 présente une mise en oeuvre de l'invention pour un cristal utilisé en quasi-accord de phase et deux cavités séparées, en géométrie linéaire ;
- La figure 8 présente l'évolution du déphasage relatif $\Delta\Phi^{ar}$ entre les rayonnements pompe, signal et complémentaire au cours d'une réflexion sur une interface niobate de lithium/aluminium en fonction de la longueur d'onde signal ou complémentaire. Les différentes courbes ont été calculées pour différentes longueurs d'onde de pompe : 1,55, 1,06 et 0,532 $\mu$m ;
- La figure 9 illustre une mise en oeuvre de l'invention en quasi-accord de phase avec possibilité de sélectionner électriquement le mode de fonctionnement de l'OPO ;
- La figure 10 illustre une mise en oeuvre de l'invention en quasi-accord de phase avec possibilité de fixer le mode de fonctionnement de l'OPO par translation du cristal non linéaire ;
- La figure 11 présente trois miroirs large bande réalisés à partir de différents arrangements de miroirs dispersifs et de miroirs multicouches permettant d'assurer le retour de pompe à maintien de phase achromatique ;
- La figure 12 présente une mise en oeuvre de l'invention utilisant une combinaison des deux miroirs dispersifs et un miroir multicouche avec réflexion partielle du rayonnement de pompe ;
- La figure 13 présente une réalisation monobloc de l'invention utilisant deux miroirs dispersifs et un miroir multicouche séparés par un disque de longueur optique variable.

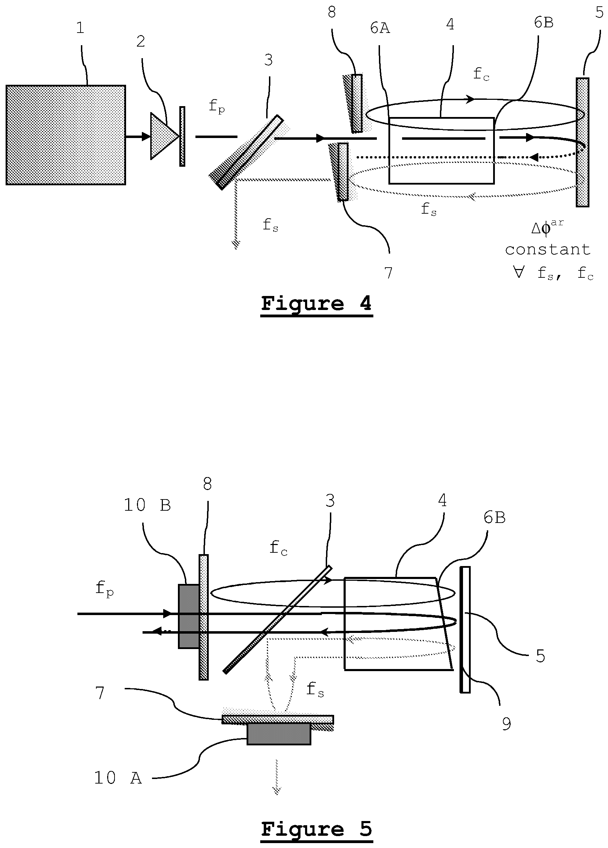

Un schéma général de mise en oeuvre de l'invention est donné sur la figure 4. Le laser 1 délivre le rayonnement pompe de fréquence fp qui traverse successivement un isolateur optique 2, une lame séparatrice 3 puis des miroirs 7 ou 8 et un cristal non linéaire 4 par les faces d'entrée (6A) et de sortie (6B), le rayonnement signal de fréquence $f_s$ et le rayonnement complémentaire de fréquence $f_c$ effectuant de nombreux allers et retours à travers le cristal 4 par réflexion entre le miroir large bande commun 5 et les miroirs 7 et 8, respectivement. Les rayonnements pompe, signal et complémentaire sont réfléchis totalement ou partiellement en sortie du cristal. La réflexion des trois rayonnements est assurée par un miroir large bande commun 5 qui maintient une valeur du déphasage $\Delta\Phi^{ar} = \Delta\Phi^r - \Delta\Phi^a$ entre la phase relative ($\Delta\Phi^a$) des trois rayonnements allers et la phase relative ($\Delta\Phi^r$) des trois rayonnements réfléchis, indépendante de la fréquence signal ou complémentaire. Le rayonnement signal à la fréquence $f_s$, est disponible en amont de l'OPO, après avoir été filtré du rayonnement pompe non converti au moyen de la lame 3.

La figure 5 illustre une première mise en oeuvre de l'invention en géométrie repliée. La réflexion des trois rayonnements est assurée par un dépôt métallique 9 de quelques micromètres d'épaisseur disposé près de la face de sortie 6B du cristal non linéaire 4. Le rayonnement complémentaire oscille entre le miroir 8 et la surface métallique 9 tandis que le rayonnement signal oscille entre le miroir 7 et la surface métallique 9. Les miroirs 7 et 8 sont montés sur des cales piézo-électriques 10A et 10B afin de pouvoir changer séparément les longueurs des cavités optiques et accorder ainsi finement la fréquence délivrée par l'OPO. Les rayonnements pompe, signal et complémentaire interagissent dans la partie commune du résonateur contenant le cristal non linéaire 4 utilisé ici en accord de phase par biréfringence. La lame séparatrice 3 assure, à l'intérieur de la cavité, la séparation des rayonnements signal et complémentaire. La face de sortie 6B est orientée pour que l'angle d'incidence des rayonnements signal et complémentaire soit le plus proche possible de celui de l'incidence de Brewster afin de limiter les pertes de Fresnel sans recourir à un traitement anti-reflet qui introduirait un déphasage entre les rayonnements variable avec la fréquence (chromatisme). Dans ces conditions et compte tenu de la faible dispersion optique de l'espace d'air séparant la surface 6B de la surface 9, la valeur du déphasage relatif $\Delta\Phi^{ar}$ est simplement égale à l'écart de déphasage relatif qui apparaît entre les ondes aller et retour ($\Delta\Phi^r - \Delta\Phi^a$) lors de la réflexion métallique des trois rayonnements sur la surface 9.

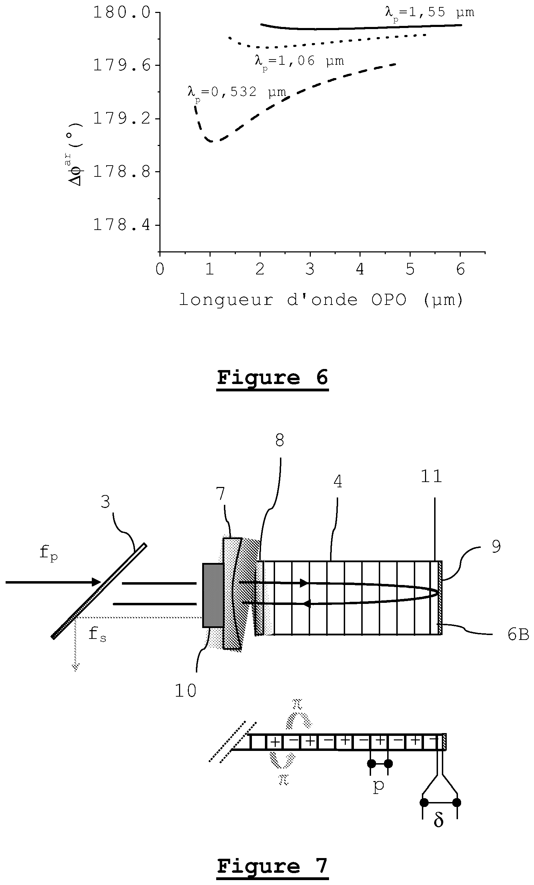

Afin de préciser le mode de fonctionnement de l'OPO présenté figure 5, le miroir métallique 9 est réalisé par dépôt d'aluminium. L'évolution du déphasage relatif $\Delta\Phi^{ar}$ en fonction de la fréquence (signal ou complémentaire) émise par l'OPO peut être calculée en utilisant les valeurs des indices données dans [D. Y. Smith, E. Shiles, M. Inokuti, « The optical properties of Aluminium », in E. D. Palik (ed.), Handbook of optical constants of solids, Academic Press, Orlando, 369 (1985)]. Pour couvrir un large domaine de fréquence, trois longueurs d'onde de rayonnement de pompe usuelles sont considérées de façon non exclusive : 1,55 $\mu$m, 1,064 $\mu$m et 0,532 $\mu$m. La figure 6 montre clairement que pour les différentes longueurs d'onde de pompe, $\Delta\Phi^{ar}$ reste proche de n quelque soit la fréquence émise par l'OPO, ce qui démontre le caractère achromatique recherché dans l'invention. Compte tenu que le cristal est ici utilisé en accord de phase par biréfringence et que $\Delta\Phi^{ar} \approx n$, la courbe d'efficacité de l'OPO présente deux maxima disposés symétriquement de part et d'autre de l'accord de phase exact, conformément à la figure 2. Les longueurs des cavités signal et complémentaire peuvent être réglées indépendamment afin d'obtenir des résonances situées à la position des deux maxima et atteindre ainsi le deuxième mode de fonctionnement b) introduit figure 3.

La figure 7 illustre un premier type de réalisation de l'invention tirant avantage des propriétés spécifiques des cristaux utilisés en quasi-accord de phase. Suivant la figure 7, le rayonnement signal oscille entre les miroirs 7 et 9 tandis que le rayonnement complémentaire oscille entre les miroirs 8 et 9, ces miroirs formant ici un résonateur linéaire à cavités imbriquées. Le rayonnement signal est extrait à travers le miroir 7 avant d'être filtré du rayonnement de pompe au moyen de la lame séparatrice 3. Le miroir métallique 9 est directement déposé sur la face de sortie 6B du dernier domaine de retournement 11. L'arrangement se caractérise en ce que la largeur ($\delta$) du dernier domaine traversé est fixée par construction en abrasant plus ou moins la surface 6B suivant le mode de fonctionnement désiré. Après traversée du dernier domaine de retournement 11 et réflexion sur le miroir métallique 9, les trois rayonnements interagissent au retour dans le cristal non linéaire 4 avec un déphasage relatif $\Delta\Phi = \Delta\Phi^{ar} + 2\Delta\Phi^d(\delta)$ où les trajets aller et retour à travers le domaine 11 ont été pris en compte.

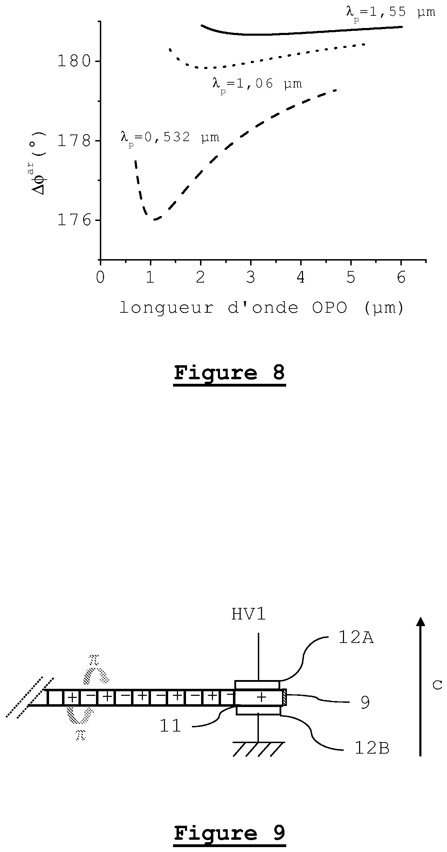

Ainsi, la valeur de $\Delta\Phi$ peut être ajustée continûment lors de la construction suivant la valeur de 5 choisie. En considérant comme précédemment un miroir métallique réalisé par dépôt d'aluminium et en supposant que le cristal non linéaire 4 est formé de PPLN, il est possible de calculer, à partir des valeurs des indices données dans [D. H. Jundt, « Temperature dépendent Sellmeier équation for the index of refraction, ne, in congruent niobate », Opt. Lett., 22, 1553 (1997)], le déphasage relatif $\Delta\Phi^{ar}$ associé à une interface niobate de litium/aluminium. Comme le montre la figure 8, la valeur de $\Delta\Phi^{ar}$ reste voisine de n quelque soit la fréquence de fonctionnement de l'OPO et pour les différentes longueurs d'onde de pompe considérées. Dans ces conditions, les rayonnements interagissent au retour dans le cristal avec une phase relative donnée par $\Delta\Phi \approx n + 2\Delta\Phi^d(\delta)$. Cette relation reste d'ailleurs valable pour d'autres interfaces associant des matériaux tels que PPKTP, PPKTA,.... et différents revêtements métalliques (Au, Ag, Cr,...). Les deux modes de fonctionnement peuvent être alors obtenus suivant la valeur de 5 :

- Si 5 = n $\times$ $l_c$ où n est un entier impair $\geq$ 1, alors $\Delta\Phi$ sera égal à n [modulo $2\pi$] et la conversion paramétrique se maintiendra au retour sans discontinuité des sauts de phase de n entre les domaines ferroélectriques successifs. Dans cette situation, l'efficacité de la conversion paramétrique est optimale sur toute la plage de fonctionnement de l'OPO définie par la valeur de $l_c$ et la température du cristal. La courbe d'efficacité a une forme « en cloche » symétrique. Les longueurs des cavités signal et complémentaires sont alors choisies pour obtenir le mode de fonctionnement a) de la figure 3.
- Si $\delta$ = (n + 0,5) $\times$ $l_c$, alors $\Delta\Phi$ est égal à 0 [modulo $2\pi$]. Dans cette situation, la courbe d'efficacité présente une « double bosse » qui est favorable à l'obtention d'un fonctionnement à deux longueurs d'onde. Les longueurs des cavités signal et complémentaires sont alors choisies pour obtenir le mode de fonctionnement b) de la figure 3.

Pour des valeurs intermédiaires de $\delta$, il est possible d'obtenir une forme de la courbe d'efficacité à « double bosse » dissymétrique qui conduit à l'émission de deux longueurs d'onde ayant des intensités différentes.

Ainsi, suivant le type de réalisation schématisé par la figure 7, un OPO doublement résonnant avec retour de pompe à maintien de phase achromatique peut être obtenu. Par construction, la valeur du déphasage relatif entre les trois rayonnements interagissant au retour dans le cristal ($\Delta\Phi$) peut être fixée en fonction du mode de fonctionnement souhaité et les longueurs des cavités choisies en conséquence. Compte tenu du caractère achromatique du dispositif, un asservissement électronique de la phase n'est plus nécessaire. De plus, le dépôt métallique 9 peut être réalisé pour un coût bien inférieur à celui associé aux processus de dépôt multicouches diélectriques.

Le dispositif de l'invention ne nécessitant aucun asservissement pour maintenir la valeur de $\Delta\Phi^{ar}$ constante sur une large gamme de fréquence, le changement de mode de fonctionnement de l'oscillateur devient alors possible en modifiant la longueur 5 du dernier domaine.

La figure 9 présente ainsi un deuxième type de réalisation utilisant un cristal de PPLN en quasi-accord de phase avec la possibilité de sélectionner électriquement la valeur de $\Delta\Phi^d$. Pour cela, le dernier domaine de retournement 11 présente une largeur 5 suffisamment importante (dix millimètres, typiquement) de sorte que par effet électro-optique, il est possible de modifier sensiblement sa longueur optique sur plusieurs $\mu$m et ainsi le mode de fonctionnement de l'OPO. Deux électrodes 12A et 12B sont disposés de part et d'autre du domaine 11 afin d'appliquer un champ électrique suivant l'axe cristallographique c du cristal. En réglant la valeur de la tension HV1 appliquée aux électrodes 12A et 12B, il est possible de moduler très rapidement le déphasage relatif $\Delta\Phi$ au retour et donc de changer le mode de fonctionnement de l'OPO tout en conservant le caractère achromatique du retour de phase.

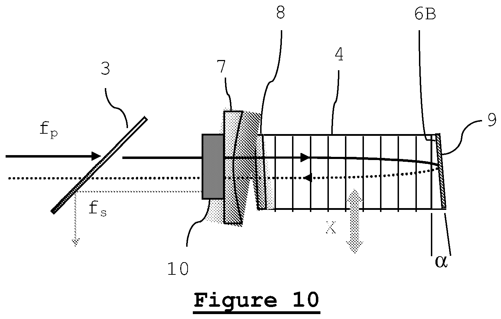

La figure 10 présente un autre type de réalisation de l'invention qui se caractérise par le fait que la surface 6B a été polie avec un angle d'inclinaison $\alpha$ (de l'ordre de quelques mrad) par rapport à l'orientation des domaines ferroélectriques de sorte que la valeur du déphasage relatif $\Delta\Phi^d$ peut être modifiée selon la position latérale du cristal par rapport au rayonnement pompe. Ce type de réalisation qui s'applique aux cristaux utilisés en quasi-accord de phase, permet de choisir la forme de la courbe d'efficacité et ainsi de changer le mode de fonctionnement de l'OPO par une simple translation du cristal suivant la direction X.

Les différents types de réalisation décrits ci-dessus présentent l'avantage d'un faible coût de réalisation de par l'utilisation d'un revêtement métallique. Toutefois, les paramètres (module et phase) de la réflexion métallique sont peu modifiables. Afin de maîtriser la valeur de ces paramètres, tout en conservant le caractère achromatique recherché, les trois rayonnements seront avantageusement réfléchis par un miroir large bande réalisé à partir d'une combinaison de miroirs diélectriques dispersifs de type « double chirped » associée à un miroir diélectrique standard. Les miroirs diélectriques dispersifs, dont les principales propriétés sont détaillées dans [G. Steinmeyer, « Femtosecond dispersion compensation with multilayer coatings : toward the optical octave », Appl. Opt., 45, n°7, 1484 (2006)], ont été tout particulièrement développés pour la production d'impulsions optiques très brèves, à l'échelle de la femtoseconde. Ils ont notamment été utilisés pour compenser la dispersion optique de vitesse de groupe dans les cristaux d'OPO simplement résonnant fonctionnant avec une cavité en anneau et sous un pompage impulsionnel de type synchrone, voir [J. Hebling, H. Giessen, S. linden, J. Khuhl, « Mirror-dispersion-compensated femtosecond optical parametric oscilator », Opt. Comm., 141, 229 (1997)]. La production d'impulsions de plus en plus brèves a largement contribué au développement de ces miroirs en vue de contrôler la dispersion de retard de groupe d'une impulsion lumineuse, quantité qui dépend de la dérivée seconde de la phase en fonction de la pulsation $\left(\dfrac{\partial^2\varphi}{\partial\omega^2}\right)$.

La recherche du caractère achromatique proposé dans l'invention revient à se placer dans des conditions telles que la variation de phase $\left(\dfrac{\partial\varphi}{\partial\omega}\right)$ entre les rayonnements soit une fonction linéaire de la fréquence. Ceci conduit à rechercher des dispositifs tels que $\left(\dfrac{\partial^2\varphi}{\partial\omega^2}\right)$ soit indépendant de $\omega$, donc à mettre en oeuvre une combinaison particulière de miroirs dispersifs.

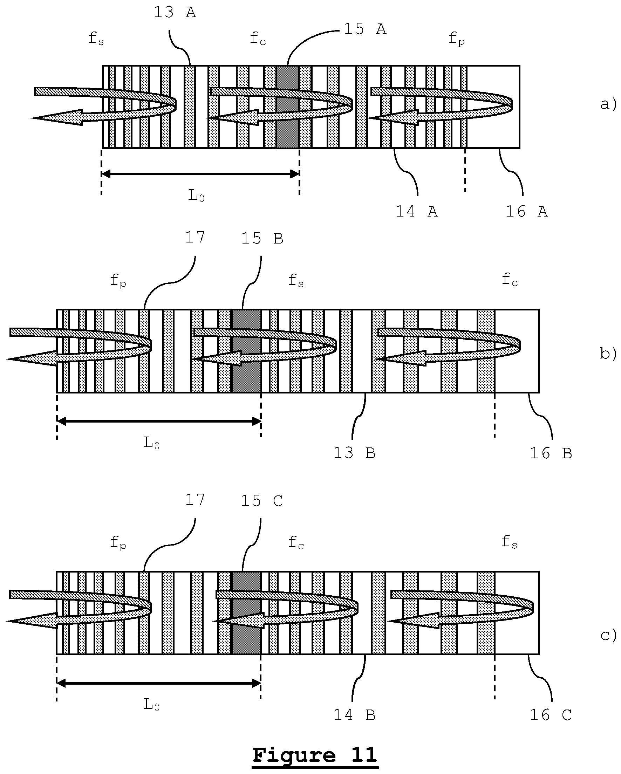

La figure 11 présente trois miroirs large bande possibles réalisés en combinant des miroirs diélectriques dispersifs et un miroir multicouches standard, suivant que la fréquence de pompe est accordable ou non :

- l'arrangement a) de la figure 11 est composé de deux miroirs dispersifs de type « double chirped » 13A et 14A et d'un miroir multicouche standard 16A. Le miroir 16A est destiné à réfléchir totalement ou partiellement le rayonnement de pompe dont la fréquence est supposée fixe tandis que les miroirs dispersifs 13A et 14A réfléchissent respectivement les rayonnements signal et complémentaire. Pour ce type de fonctionnement où les fréquences signal et complémentaire sont continûment accordables, les miroirs 13A et 14A ont des dispersions de retard de groupe opposées. La distance $L_0$ entre les miroirs 13A et 14A est fixée en ajustant lors de la procédure de dépôt des couches diélectriques, l'épaisseur de la couche 15A. Les caractéristiques spectrales des miroirs dispersifs (plage de réflexion, dispersion de retard de groupe) ainsi que la distance $L_0$ sont fixées de sorte que, à la réflexion, la somme des sauts de phase $\varphi_s{}^{ar} + \varphi_c{}^{ar} = (\varphi_s{}^r - \varphi_s{}^a) + (\varphi_c{}^r - \varphi_c{}^a)$ ait une valeur indépendante des fréquences signal et complémentaire. Dans ces conditions et compte tenu que la fréquence pompe est fixe, le déphasage relatif $\Delta\Phi^{ar}$ entre les rayonnements est maintenu constant au cours de la réflexion. Etant donné que les caractéristiques spectrales des miroirs dispersifs peuvent être contrôlées sur des plages très étendues (jusqu'à un octave), le retour de pompe à maintien de phase achromatique est assuré sur un large domaine spectral.
- l'arrangement b) est destiné à un type d'opération à fréquence complémentaire fixe. Dans ce cas le miroir multicouche standard 16B réfléchit totalement ou partiellement le rayonnement complémentaire tandis que les miroirs dispersifs 13B et 17 réfléchissent les rayonnements signal et pompe, de fréquences accordables. Les caractéristiques spectrales des miroirs dispersifs 13B et 17 ainsi que l'épaisseur de la couche 15B sont maintenant choisies pour que, à la réflexion, la différence de phases $\varphi_p - \varphi_s$ ne dépende pas des fréquences pompe et signal. Dans ces conditions et compte tenu que la fréquence complémentaire est maintenue fixe, le déphasage relatif $\Delta\Phi^{ar}$ entre les rayonnements est maintenue constant au cours de la réflexion.
- l'arrangement c) est destiné à un type d'opération à fréquence signal fixe. Il se distingue du cas b) par le fait que le rayonnement complémentaire est réfléchi par un miroir dispersif 14B tandis que le signal est réfléchi totalement ou partiellement par le miroir diélectrique standard 16C. Comme précédemment, il est possible de fixer les caractéristiques spectrales des miroirs 17 et 14B ainsi que l'épaisseur de la couche 15C afin de rendre le déphasage relatif $\Delta\Phi^{ar}$ indépendant des fréquences pompe et complémentaire.

Pour ces différents arrangements, un modèle simplifié permet de préciser les conditions à satisfaire pour obtenir, à la réflexion, le maintien du déphasage relatif $\Delta\Phi^{ar}$.

Soit $\varphi_j{}^{ar}$ le déphasage entre l'aller et le retour d'un rayonnement j réfléchi sur un des différents arrangements de la figure 11. À partir d'un modèle simple, l'objectif est de préciser la valeur du déphasage relatif $\Delta\Phi^{ar} = \varphi_p{}^{ar} - (\varphi_s{}^{ar} + \varphi_c{}^{ar})$ qui apparaît entre les rayonnements pompe, signal et complémentaire au cours de la réflexion et d'en déduire les conditions à satisfaire pour obtenir un fonctionnement avec retour de pompe à maintien de phase achromatique.

Concernant l'arrangement a) de la figure 11, étant donné que la fréquence pompe est supposée fixe, le changement de phase à la réflexion est constant, soit $\varphi_p^{ar} = \varphi_p^0$ la valeur de ce changement de phase. Les phases des rayonnements signal et complémentaire s'écrivent, respectivement :

$$\varphi_s^{ar} = \frac{2\omega_s \, \bar{n}_s}{c} \, L(\omega_s) \text{ et} \qquad \varphi_c^{ar} = \frac{2\omega_c}{c} \left[ L_0 + \bar{n}_c \, L(\omega_c) \right].$$

Dans ces deux expressions $\omega_j$ est la pulsation du rayonnement j ; c est la vitesse de la lumière ; $n_j$ est l'indice moyen vu par le rayonnement j au cours de sa traversée à travers les différentes couches d'indice haut $n^H$ et bas $n^B$ qui compose le miroir dispersif ( $\bar{n}_j = \frac{n_j^H + n_j^B}{2}$ ) ; $L_0$ est l'épaisseur optique traversée par le rayonnement complémentaire avant d'atteindre le miroir dispersif complémentaire ; $L(\omega_j)$ est la profondeur de pénétration du rayonnement j à travers le miroir dispersif réfléchissant ce rayonnement j . Pour une variation linéaire de la profondeur de pénétration en fonction de $\omega_j$, $L(\omega_j)$ s'écrit :

$$L(\omega_j) = \frac{c}{4 \, \bar{n}_j} \, D_j \left( \omega_j - \Omega_0^j \right)$$

où $\Omega_0^j$ est la borne inférieure de la plage de réflexion du miroir dispersif réfléchissant le rayonnement j ; $D_j$ est la dispersion de retard de groupe du rayonnement j, définie par $D_j = \frac{\partial^2 \varphi_j}{\partial \omega_j^2}$ .

Le déphasage relatif $\Delta\Phi^{ar}$ est alors donné par :

$$\Delta\Phi^{ar} = \varphi_p^0 - \left[ \frac{\omega_s}{2} D_s \left( \omega_s - \Omega_0^s \right) + \frac{2L_0}{c} \omega_c + \frac{\omega_c}{2} D_c \left( \omega_c - \Omega_0^c \right) \right]$$

Les conditions du retour de pompe à maintien de phase achromatique sont vérifiées lorsque la dérivée par rapport à $\omega_s$ et $\omega_c$ de la quantité entre crochets est nulle, d'où les conditions suivantes :

$$D_s + D_c = 0 \, , \qquad \Omega_0^s + \Omega_0^c = \omega_p \, , \qquad \text{et} \qquad L_0 = \frac{\omega_p D_s c}{4} \, .$$

Ces égalités montrent que les miroirs dispersifs réfléchissant les rayonnements signal et complémentaire doivent présenter des dispersions de retard de groupe opposées de façon à se compenser lorsque les fréquences signal et complémentaire varient. La distance $L_0$ dépend des caractéristiques spectrales des miroirs dispersifs. A titre d'exemple, si la dispersion de retard de groupe du rayonnement signal ($D_s$) est de 100 $fs^2$, alors, pour une fréquence de pompe de 1 |m, $L_0 \sim 15$ $\mu$m.

En ce qui concerne l'arrangement b) de la figure 11, en suivant la procédure ci-dessus , les conditions d'achromatisme sont :

$$D_s - D_p = 0 \, , \qquad \Omega_0^p - \Omega_0^s = \omega_p \, , \qquad \text{et} \qquad L_0 = \frac{\omega_c D_p c}{4} \, .$$

Cette fois, étant donné que les fréquences signal et pompe varient dans le même sens, les deux miroirs dispersifs auront la même dispersion de retard de groupe.

Des relations équivalentes sont obtenues pour l'arrangement c) de la figure 11.

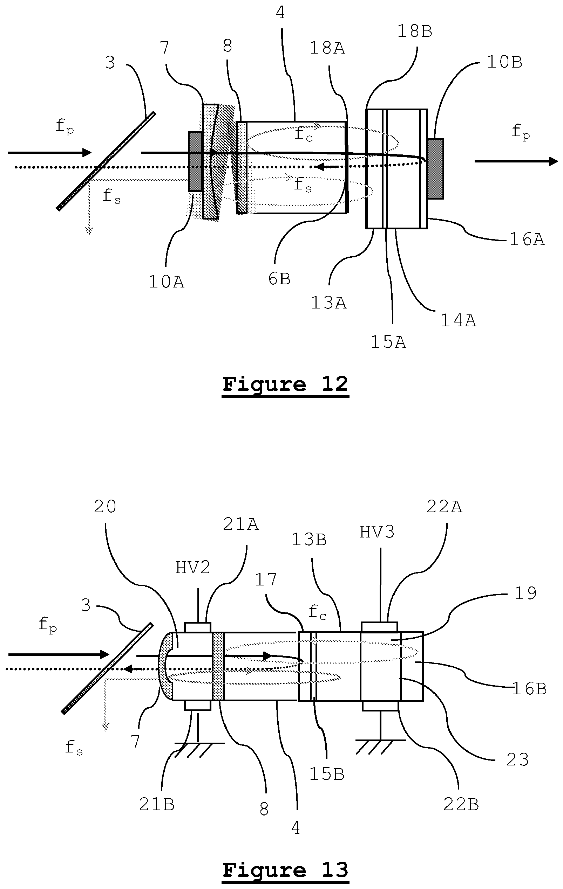

Bien entendu, la mise en oeuvre des différents miroirs large bande de la figure 11 s'applique tout naturellement aux précédents types de réalisation utilisant une réflexion métallique avec l'avantage de pourvoir fixer le coefficient de réflexion et le déphasage relatif $\Delta\Phi^{ar}$ des différents rayonnements. Cette possibilité permet alors d'envisager des modes de fonctionnement qui n'étaient pas accessibles par une simple réflexion métallique. Ainsi, la figure 12 présente un mode de fonctionnement utilisant un cristal biréfringent 4 et un miroir large bande conçu suivant l'arrangement a) de la figure 11. Les rayonnements signal et complémentaire oscillent respectivement entre les paires de miroirs 7-13A et 8-14A où 13A et 14A sont des miroirs dispersifs. Le rayonnement pompe est réfléchi par le miroir multicouche 16A qui est partiellement réfléchissant à la fréquence pompe. Conformément à [M. Lefebvre, A. Desormeaux, E. Rosencher, « Oscillateur paramétrique doublement résonnant à retour de pompe adapté », WO2005111711 (A1), (2005)], le coefficient de réflexion à la fréquence pompe est de l'ordre de 20%. Deux cales piézoélectriques 10A et 10B permettent de modifier finement les longueurs des cavités signal et complémentaire afin d'accorder la fréquence émise par l'OPO. De plus, la face de sortie 6B du cristal ainsi que le miroir dispersif 13A sont revêtus de couches anti-reflet 18A et 18B afin de limiter les pertes de Fresnel et les effets de Fabry Perot parasites entre la surface 6B et la face externe du miroir 13A.

La figure 13 présente un type de réalisation monobloc mettant en oeuvre l'arrangement b) de la figure 11. Le rayonnement signal oscille entre les miroirs 7 et 13B tandis que le rayonnement complémentaire oscille entre les miroirs 8 et 16B et le rayonnement pompe est réfléchi par le miroir dispersif 17. Le miroir 7 est partiellement réfléchissant à la fréquence signal afin d'assurer le couplage vers l'utilisation extérieure. Un disque 20, constitué de matériau électro-optique est inséré entre les miroirs 7 et 8. Il est ainsi possible de modifier la longueur optique de la cavité signal et par conséquent la fréquence signal en appliquant une haute tension HV2 par l'intermédiaire des deux électrodes 21A et 21B disposées de part et d'autre du disque 20. Pour obtenir un accord continu de la fréquence signal, la fréquence pompe est elle même accordable. Elle peut être produite par un laser à fibre par exemple. Dans le type de réalisation de la figure 13, le miroir diélectrique 16B est déposé sur la face externe 23 d'un disque électro-optique 19. Ce disque 19 est disposé directement sur le miroir dispersif 13B suivant les techniques d'adhérence et de collage connues de l'art antérieur. Deux électrodes 22A et 22B sont disposées de part et d'autre du disque 19 afin d'appliquer une haute tension HV3 qui permet de modifier la longueur optique du disque 19 et ainsi le déphasage relatif du rayonnement complémentaire par rapport aux rayonnements pompe et signal. De cette manière, la valeur du déphasage relatif $\Delta\Phi^{ar}$ peut être changée très rapidement, ce qui permet de varier le mode de fonctionnement de l'OPO suivant l'application visée.

Bien entendu, les types de réalisation proposés ne représentent pas une liste exhaustive des réalisations possibles.

## Revendications

**1.** Oscillateur paramétrique optique doublement résonnant avec retour du rayonnement pompe comportant une source de rayonnement pompe délivrant un rayonnement pompe de fréquence $f_p$ et comportant dans le sens de propagation aller du rayonnement pompe,

- un cristal (4) non linéaire ayant une face avant (6A) et une face arrière (6B),
- un dispositif (5) situé en aval de la face arrière (6B) du cristal, définissant avec un premier miroir (7) situé en amont de la face avant (6A) du cristal une première cavité résonnante pour un rayonnement signal de fréquence $f_s$ et avec un second miroir (8) situé en amont de la face avant (6A) du cristal une seconde cavité résonnante pour un rayonnement complémentaire de fréquence $f_c$, l'une au moins des deux cavités étant de longueur ajustable pour assurer un mode de fonctionnement accordable de l'oscillateur qui soit mono fréquence ($f_p=f_s^0+f_c^0$) ou bi fréquence ($f_p=f_s^0+f_c^0=f_s^1+f_c^1$), exclusivement, le dispositif (5) réfléchissant en fonctionnement les rayonnements pompe, signal et complémentaire en introduisant un déphasage relatif $\Delta\Phi^{ar} = \Delta\Phi^r - \Delta\Phi^a$ ou $\Delta\Phi^a = \varphi_p^a - (\varphi_s^a + \varphi_c^a)$ avec $\varphi_p^a$, $\varphi_s^a$ et $\varphi_c^a$ respectivement les phases des rayonnements pompe, signal et complémentaire sortant de la face arrière (6B) du cristal (4) lors des trajets allers et avec $\Delta\varphi^r=\varphi_p^r - (\varphi_s^r + \varphi_c^r)$ respectivement les phases des rayonnements pompe, signal et complémentaire entrant par la face arrière (6B) du cristal (4) lors des trajets retours ; **caractérisé en ce que** le dispositif (5) est un miroir commun aux deux cavités et est un miroir métallique tel que la valeur de l'écart de déphasage relatif $\Delta\Phi^{ar}$ est égal à $\pi$ (mod. $2\pi$), ou est un miroir large bande commun aux deux cavités, comportant un empilement multicouche agencé pour former une paire de miroirs diélectriques dispersifs et un miroir diélectrique standard.

**2.** Oscillateur paramétrique optique doublement résonnant selon la revendication précédente, **caractérisé en ce que** la face arrière du cristal (6B) est inclinée selon l'incidence de Brewster, ce grâce à quoi les pertes de Fresnel sont limitées.

**3.** Oscillateur paramétrique selon l'une des revendications 1 à 2, **caractérisé en ce que** le cristal non linéaire est utilisé en quasi accord de phase et que le dernier domaine (11) présente une longueur optique variable ce grâce à quoi le mode de fonctionnement peut être changé.

4. Oscillateur paramétrique selon la revendication 3, **caractérisé en ce que** la longueur optique variable provient de la forme prismatique du dernier domaine, ce grâce à quoi, le mode de fonctionnement peut être changé par translation du cristal suivant une direction orthogonale au rayonnement pompe.

5. Oscillateur paramétrique selon la revendication 3 **caractérisé en ce qu'**un champ électrique est appliqué suivant l'axe cristallographique du cristal pour faire varier la longueur optique.

6. Oscillateur paramétrique selon la revendication 1 **caractérisé en ce que** la paire de miroirs diélectriques dispersifs et le miroir diélectrique standard sont réunis par un matériau de longueur optique variable, ce grâce à quoi le mode de fonctionnement peut être changé.

**Patentansprüche**

1. Optischer parametrischer Oszillator mit Doppelresonanz mit Rückweg der Pumpstrahlung, aufweisend eine Pumpstrahlungsquelle, die eine Pumpstrahlung mit der Frequenz $f_p$ bereitstellt und in der Hin-Verbreitungsrichtung der Pumpstrahlung aufweist:

- einen nicht linearen Kristall (4) mit einer Vorderseite (6A) und einer Rückseite (6B),
- eine Vorrichtung (5), die sich nach der Rückseite (6B) des Kristalls befindet, die mit einem ersten Spiegel (7), der sich vor der Vorderseite (6A) des Kristalls befindet, einen ersten Resonanzhohlraum für eine Signalstrahlung mit der Frequenz $f_s$ und mit einem zweiten Spiegel (8), der sich vor der Vorderseite (6A) des Kristalls befindet, einen zweiten Resonanzhohlraum für eine komplementäre Strahlung mit der Frequenz $f_c$ definiert, wobei mindestens einer der zwei Hohlräume längeneinstellbar ist, um eine abstimmbare Betriebsweise des Oszillators, der ausschließlich monofrequent ($f_p = f_s^0 + f_c^0$) oder bifrequent ($f_p = f_s^0 + f_c^0 = f_s^1 + f_c^1$) ist, zu sichern, wobei die Vorrichtung (5) im Betrieb die Pump-, Signal- und komplementäre Strahlung bei Einfügung einer relativen Phasenverschiebung

$$\Delta\Phi^{ar} = \Delta\Phi^{r} - \Delta\Phi^{a},$$

wobei

$$\Delta\Phi^{a} = -\phi_p^{a} - (-\phi_s^{a} + -\phi_c^{a})$$

mit jeweils $-\phi_p^{a}$, $-\phi_s^{a}$ und $-\phi_c^{a}$ als Phasen der Pump-, Signal- und komplementären Strahlung, die aus der Rückseite (6B) des Kristalls (4) bei Hinwegen austritt und mit

$$\Delta\Phi^{r} = -\phi_p^{r} - (-\phi_s^{r} + -\phi_c^{r})$$

jeweils als Phasen der Pump-, Signal- und komplementären Strahlung, die durch die Rückseite (6B) des Kristalls (4) bei Rückwegen eintritt, reflektiert,
**dadurch gekennzeichnet, dass** die Vorrichtung (5) ein Spiegel ist, der den zwei Hohlräumen gemeinsam ist und ein Metallspiegel ist, so wie der Wert der relativen Phasenverschiebungsdifferenz $\Delta\Phi^{ar}$ gleich p ist (mod 2p), oder
ein Breitbandspiegel ist, der den beiden Hohlräumen gemeinsam ist, umfassend einen Vielschichtstapel, der ausgebildet ist, um ein Paar dielektrischer dispersiver Spiegel und einen dielektrischen Standardspiegel zu bilden.

2. Optischer parametrischer Oszillator mit Doppelresonanz nach vorangehendem Anspruch, **dadurch gekennzeichnet, dass** die Rückseite des Kristalls (6B) gemäß Brewster-Winkel geneigt ist, weswegen die Fresnel-Verluste begrenzt sind.

3. Parametrischer Oszillator nach einem der Ansprüche 1 bis 2, **dadurch gekennzeichnet, dass** der nicht lineare Kristall quasi in Phasenabstimmung verwendet wird und dass der letzte Bereich (11) eine variable optische Länge aufweist, weswegen die Betriebsweise veränderbar ist.

4. Parametrischer Oszillator nach Anspruch 3, **dadurch gekennzeichnet, dass** die variable optische Länge von der prismatischen Form des letzten Bereichs herrührt, weswegen die Betriebsweise durch Verschieben des Kristalls gemäß einer Richtung, die orthogonal zur Pumpstrahlung ist, veränderbar ist.

5. Parametrischer Oszillator nach Anspruch 3, **dadurch gekennzeichnet, dass** ein elektrisches Feld gemäß der kristallographischen Achse des Kristalls angewendet wird, um die optische Länge zu verändern.

6. Parametrischer Oszillator nach Anspruch 1, **dadurch gekennzeichnet, dass** das Paar dielektrischer dispersiver Spiegel und der dielektrische Standardspiegel mit Hilfe eines Materials mit variabler optischer Länge vereint sind, weswegen die Betriebsweise veränderbar ist.

## Claims

1. A doubly resonant optical parametric oscillator with return of the pump radiation comprising a pump radiation source delivering a pump radiation at the frequency $f_p$ and comprising, in the direction of out propagation of the pump radiation,

    - a non-linear crystal (4) having a front face (6A) and a rear face (6B),
    - a device (5) situated downstream of the rear face (6B) of the crystal, defining with a first mirror (7) situated upstream of the front face (6A) of the crystal a first resonant cavity for a signal radiation at the frequency $f_s$ and with a second mirror (8) situated upstream of the front face (6A) of the crystal a second resonant cavity for a complementary radiation at the frequency $f_c$, one at least of the two cavities being of adjustable length to ensure a tunable operating mode of the oscillator which is mono" frequency ($f_p = f_s^0 + f_c^0$) or bi- frequency ($f_p = f_s^0 + f_c^0 = f_s^1 + f_c^1$), exclusively,
    the device (5) reflecting in operation the pump, signal and complementary radiations by introducing a relative dephasing

$$\Delta\beta^{ar} = \Delta\beta^{r} - \Delta\beta^{a}$$

    where

$$\Delta\beta^{a} = -_p^a - (-_s^a$$

    $+ -_c^a$) with $-_p^a$, $-_s^a$ and $-_c^a$ respectively the pump, signal and complementary radiations phases exiting via the rear face (6B) of the crystal (4) during the out paths and with $\Delta\beta^{ar}$ respectively the pump, signal and complementary radiations phases entering via the rear face (6B) of the crystal (4) during the return paths ;
    **characterized in that** the device (5) is a mirror common to the two cavities, and
    is a metallic mirror such that the value of the relative dephasing spread $\Delta\beta^{ar}$ is equal to p (mod. 2p), or
    is a wide-band mirror common to the two cavities, comprising a multilayer stack arranged to form a pair of dispersive dielectric mirrors and a standard dielectric mirror.

2. The doubly resonant optical parametric oscillator according to the preceding claim, **characterized in that** the rear face of the crystal (6B) is inclined according to the Brewster incidence, due to which Fresnel losses are limited.

3. The parametric oscillator according to one of claims 1 to 2, **characterized in that** the non-linear crystal is used in quasi phase matching and the last domain (11) has a variable optical length due to which the operating mode is changeable.

4. The parametric oscillator according to claim 3, **characterized in that** the variable optical length originates from the prismatic form of the last domain, due to which the operating mode is changeable by translation of the crystal in a direction orthogonal to the pump radiation.

5. The parametric oscillator according to claim 3, **characterized in that** an electrical field is applied along the crystallographic axis of the crystal to vary the optical length.

6. The parametric oscillator according to claim 1, **characterized in that** the pair of dispersive dielectric mirrors and the standard dielectric mirror are joined by material of variable optical length, due to which the operating mode is changeable.

**Figure 1**

$\Delta\phi^{\mathrm{ar}} = 0$

$\Delta\phi^{\mathrm{ar}} = \pi$

$-\pi$     $0$     $\pi$    $\Delta\mathbf{k}$

**Figure 2**

a)

$f_c^0$

$f_s^0$

b)

$f_c^0$    $f_c^1$

$f_s^0$    $f_s^1$

**Figure 3**

**Figure 4**

**Figure 5**

**Figure 6**

**Figure 7**

**Figure 8**

**Figure 9**

**Figure 10**

**Figure 11**

**Figure 12**

**Figure 13**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5500865 A
- US 6636343 B1
- FR 2093928
- FR 1971

- WO 2005111711 A1
- US 6295160 B1
- US 005734503 A


**Littérature non-brevet citée dans la description**

- **K. L. VODOPYANOV ; O. LEVI ; P. S. KUO ; T. J. PINGUET ; L. S. HARRIS ; M. M. FEJER ; B. GERARD ; L. BECOUARN ; E. LALLIER.** Optical parametric oscillation in quasi-phase-matched GaAs. *Opt. Lett.,* 2004, vol. 29 (16), 1912-1914
- Improvement of optical parametric oscillators by non resonant pump reflection. **J.E. BJORKHOLM ; A. ASKHIN ; R.G. SMITH.** J. of Quant. Electron. IEEE, 1970, vol. 6, 797-799
- Twin-beam génération in a triply resonant dual-cavity optical parametric oscillator. **TEJA et al.** OPTICS EXPRESS. OPTICAL SOCIETY OF AMERICA, 02 Février 1998, vol. 2, 65-72
- Entangled cavity optical parametric oscillator: OPO supreme for spectroscopy in the mid-IR. **DESORMEAUX A et al.** LASERS AND ELECTRO-OPTICS, 2005. (CLEO).CONFERENCE ON BALTIMORE. IEEE, 22 Mai 2005, 1960-1962

- The optical properties of Aluminium. **D. Y. SMITH ; E. SHILES ; M. INOKUTI.** Handbook of optical constants of solids. Academic Press, 1985, 369
- **D. H. JUNDT.** Temperature dépendent Sellmeier équation for the index of refraction, ne, in congruent niobate. *Opt. Lett.,* 1997, vol. 22, 1553
- **G. STEINMEYER.** Femtosecond dispersion compensation with multilayer coatings : toward the optical octave. *Appl. Opt.,* 2006, vol. 45 (7), 1484
- **J. HEBLING ; H. GIESSEN ; S. LINDEN ; J. KHUHL.** Mirror-dispersion-compensated femtosecond optical parametric oscilator. *Opt. Comm.,* 1997, vol. 141, 229